# FASCICULE DE BREVET EUROPEEN

(11) **EP 1 932 318 B1**
(45) Date de publication et mention de la délivrance du brevet: **30.05.2018**
(21) Numéro de dépôt: 06806958.2
(22) Date de dépôt: 04.10.2006
(51) Int. Cl.: H04L 29/06

(54) **PROCÉDÉ D'AUTHENTIFICATION D'UN CLIENT, FOURNISSEURS D'IDENTITÉS ET DE SERVICES, SIGNAUX DE REQUÊTE D'AUTHENTIFICATION ET D'ASSERTION D'AUTHENTIFICATION, ET PROGRAMMES D'ORDINATEUR CORRESPONDANTS**
VERFAHREN ZUR AUTHENTIFIZIERUNG EINES KUNDEN, IDENTITÄT UND DIENSTANBIETER, AUTHENTIFIZIERUNG UND AUTHENTIFIZIERUNGS-SICHERUNGSANFRAGESIGNALE UND ENTSPRECHENDE COMPUTERPROGRAMME
METHOD OF AUTHENTICATING A CLIENT, IDENTITY AND SERVICE PROVIDERS, AUTHENTICATION AND AUTHENTICATION ASSERTION REQUEST SIGNALS AND CORRESPONDING COMPUTER PROGRAMS

(30) Priorité: 05.10.2005 FR 0510190
(43) Date de publication de la demande: 18.06.2008
(73) Titulaire: Orange, 75015 Paris (FR)
(72) Inventeur: GOURMELEN, Gaël, F-22700 Louannec (FR); GORDON, Ariel, F-75016 Paris (FR)
(74) Mandataire: Vidon Brevets & Stratégie
(86) Numéro de dépôt international: PCT/EP2006/067023
(87) Numéro de publication internationale: WO 2007/039618

(56) Documents cités:
- EP-A- 1 610 528
- WO-A-03/100544
- US-A1- 2004 128 558

## Description

### 1. Domaine de l'invention

Le domaine de l'invention est celui de l'authentification.

Plus précisément, l'invention concerne l'authentification de clients lors d'une demande d'accès à un ou plusieurs services proposés par un fournisseur de services.

### 2. Solutions de l'art antérieur

### 2.1 Art antérieur

Les systèmes de gestion d'identités sont définis par différents organismes de normalisation tels que la « Liberty Alliance » (qui propose les spécifications « ID-FF » pour « Identity Fédération Framework », « Cadre de Fédération d'Identité »), ou « OASIS » (qui définit « SAML » pour « Security Assertions Markup Language », « Langage à balise d'assertions de sécurité »).

Les architectures de ces systèmes se basent sur les notions de fournisseurs de service (« SP » pour « Service Provider »), de fournisseurs d'identités (« IdP » pour « Identity Provider »), et de client :
- Le client correspond à n'importe quel type d'entité (par exemple un utilisateur individuel, un groupe d'utilisateurs, une entité organisationnelle, une machine, une application logicielle...) qui peut être identifiée et authentifiée.
- Le fournisseur de services (SP) propose un ou plusieurs services qui sont accessibles au client quand celui-ci s'est authentifié. Cela peut être, par exemple, un site internet de vente en ligne fournissant des produits et/ou des prestations et dont la commande et/ou le paiement n'est possible qu'à l'authentification du client.
- Le fournisseur d'identités (IdP) est une entité à laquelle les fournisseurs de services (SP) peuvent déléguer l'authentification d'un client.

Ces systèmes offrent donc aux clients des fonctionnalités d'authentification unique (« single sign on » - « SSO »), qui permettent d'accéder successivement à différents fournisseurs de services sans nécessiter une authentification systématique du client à chaque accès à un nouveau service. Classiquement, au sein de ces architectures d'authentification, le déroulement d'une interaction entre un fournisseur de services et un fournisseur d'identités est le suivant :
1. le client demande l'accès à un service au niveau du SP (par exemple, accès à son compte d'utilisateur).
2. le SP redirige alors le client vers l'IdP pour que le SP obtienne une assertion d'authentification, de la part de l'IdP, assurant que le client est identifié.
3. le client est invité à s'authentifier (s'il ne l'a pas déjà fait auparavant, au cours de l'accès à un autre service) au niveau de l'IdP.
4. En cas de succès, l'IdP redirige le client vers le SP. Dans le même temps, il fournit au SP une assertion d'authentification, qui contient les informations nécessaires à la création d'une session d'authentification pour le client au niveau du SP. Le client peut ensuite accéder au service demandé.

Ce déroulement assure donc au fournisseur de service que le client est correctement identifié et authentifié, tout en évitant au client de s'authentifier à de multiples reprises. En effet, quand différents fournisseurs de services font appel à un même fournisseur d'identités, alors le client n'a pas besoin de s'authentifier à chaque accès à un service de ces différents SP.

### 2.2 Inconvénients de l'art antérieur

Un premier inconvénient de cette technique de l'art antérieur est que lors des demandes d'authentification entre l'IdP et le SP et lors des traitements internes à l'IdP, les systèmes de gestion d'identités actuels ne permettent pas de faire la distinction entre les différents types de clients : par exemple des utilisateurs individuels, des groupes d'utilisateurs (utilisateurs collectifs), des entités organisationnelles, des machines. Ces différents types de clients peuvent être amenés à coexister dans un même IdP.

Un autre inconvénient de cette technique de l'art antérieur est qu'un système donné est voué à ne traiter qu'un type de client particulier. Par exemple ; tel IdP sera chargé de gérer des personnes physiques et un autre des entités organisationnelles.

Un corollaire de l'inconvénient précédent est que dans le cas où un système générique est conçu sur la base d'un IdP gérant différents types d'identités tels que les personnes physiques et des entités organisationnelles, alors cet IdP ne fait aucune distinction entre les différents types de client qui pourraient coexister, et va donc demander à un utilisateur individuel de s'authentifier plusieurs fois en fonction de l'identité requise lors de l'accès à un service.

Par exemple, dans le cas d'un opérateur de télécommunications, la notion générale de client regroupe :
- l'utilisateur individuel d'une part, qui est une identité individuelle pour le système de gestion d'identités,
- son foyer d'autre part, qui est à la fois un groupe d'identités individuelles et une identité collective pour le système de gestion d'identités.

Dans ce cas de figure, l'identité collective peut être associée à un accès, par exemple une ligne téléphonique fixe, et être authentifiée de manière implicite (sans interaction avec l'utilisateur) par son adresse sur le réseau de télécommunication, contrairement à l'authentification individuelle qui requiert une interaction (entrer un identifiant et un mot de passe par exemple).

Un client possède donc deux identités imbriquées : une identité individuelle et une identité collective.

Or, les systèmes de gestion d'identités (IdP) actuels ne peuvent pas faire coexister l'entité individuelle et l'entité collective et ne fonctionnent donc qu'avec la notion la plus générique, celle d'utilisateur individuel. Un SP « collectif » ne peut en fait gérer les droits d'accès à son service que sur une base d'identités individuelles.

Un autre inconvénient de cette technique est donc la complexification des opérations de mise à jour d'informations au sein de ce SP puisque au lieu d'autoriser simplement l'accès à une identité collective, on autorise l'accès à l'ensemble des identités individuelles qui la composent.

Encore un autre inconvénient de cette technique de l'art antérieur est lié au fait qu'il se pose alors des problèmes de sécurité, les droits d'administration de l'identité collective étant alors délégués à l'ensemble des entités individuelles qui la composent.

Un nouvel inconvénient découlant de cette technique de l'art antérieur est la génération de comportement nécessitant une sur-authentification alors même que cela n'est pas nécessaire, comme décrit dans l'exemple suivant : un utilisateur accédant depuis sa ligne fixe à son service collectif de messagerie vocale (de la famille, par exemple le répondeur téléphonique) est contraint par l'IdP à s'authentifier explicitement de manière individuelle alors que le SP aurait pu se contenter d'une authentification collective implicite (l'authentification par l'adresse réseau du combiné téléphonique).

Un dernier inconvénient de cette technique de l'art antérieur est la perte des bénéfices apportés par le principe d'authentification unique (« SSO ») entraînant, par exemple, une authentification systématique de l'utilisateur avec différents profils, en fonction des informations demandées par le fournisseur de services.

Le document US 2004/128558, 1er juillet 2004 (2004-07-01), présente une méthode de transmission d'information de contexte d'authentification.

### 3. Objectifs de l'invention

L'invention a notamment pour objectif de pallier ces inconvénients de l'art antérieur.

Plus précisément, un premier objectif de l'invention est de fournir un système de gestion d'identités qui permette de faire la distinction entre les différents types d'identités d'un même client. Par exemple, le système devra être capable de gérer des identités collectives et les identités individuelles qui les composent et ainsi permettre de mettre en oeuvre un fournisseur d'identités qui soit capable de traiter les demandes d'authentification des fournisseurs de services, tant en termes d'identités individuelles qu'en termes d'identités collectives. Ainsi un même système pourra tout aussi bien prendre en charge, et de manière appropriée, l'authentification d'un utilisateur physique et l'authentification de l'organisation à laquelle il appartient, afin de fournir des services en adéquation avec le niveau d'identification requis, ce dont sont incapables les fournisseurs d'identités actuels. De plus, le système pourra hiérarchiser les identités afin d'être en mesure de proposer au client une méthode d'authentification en adéquation avec le niveau d'identité requis pour accéder au service.

Un deuxième objectif de l'invention est de donner la possibilité à l'IdP de présenter au SP le niveau d'identité requis, sans avoir besoin d'une nouvelle authentification de la part du client. Par exemple, les services de l'opérateur de télécommunications s'adressent aux identités individuelles (par exemple un service de messagerie électronique), aux identités collectives (par exemple un service de messagerie vocale sur une ligne téléphonique fixe) ou aux deux. L'IdP serait alors chargé de présenter au SP l'identité qui convient à sa requête.

L'invention a pour troisième objectif de simplifier le fonctionnement et la gestion des services au sein du fournisseur de services en déléguant l'ensemble des tâches d'authentification au fournisseur d'identités, et en supprimant les tâches complexes de mises à jour des clients d'un certain type au sein du SP. Ainsi, il ne sera plus nécessaire à un SP dit collectif d'avoir connaissance de l'ensemble des entités individuelles qui le compose pour pouvoir fournir son service.

Encore un autre objectif est de permettre une augmentation significative de la sécurité d'accès aux services en s'assurant que seuls des clients individuels puissent posséder des droits d'administration.

L'invention a enfin pour objectif d'offrir plus de commodité aux utilisateurs notamment en facilitant la navigation sur les sites Internet, et en respectant le principe d'authentification unique (« SSO »).

### 4. Résumé de l'invention

Ces objectifs, ainsi que d'autres qui apparaîtront par la suite, sont atteints à l'aide d'un procédé d'authentification d'un client souhaitant accéder à un service d'un fournisseur de services, ledit fournisseur de services interrogeant un fournisseur d'identités pour vérifier l'identité dudit client et autoriser ce dernier à accéder audit service,

Selon l'invention, un tel procédé comprend avantageusement :
- au moins une étape de vérification auprès dudit fournisseur d'identités qu'un niveau d'identité correspondant à au moins une authentification antérieure dudit client est mémorisé au sein dudit fournisseur d'identités,
- une étape de délivrance audit client d'une autorisation d'accès audit service, ladite étape étant effectuée :
   - soit directement à la suite de ladite étape de vérification, dans le cas où le niveau d'identité requis pour l'accès audit service est inférieur audit niveau d'identité mémorisé,
   - soit à la suite des étapes suivantes, dans le cas où le niveau d'identité requis pour l'accès audit service est supérieur audit niveau d'identité mémorisé ou bien dans le cas où aucune authentification du client n'est disponible :
      - demande d'authentification dudit client répondant audit niveau d'identité requis,
      - remplacement dudit niveau d'identité mémorisé par ledit niveau d'identité requis si ledit client est authentifié par ledit fournisseur d'identités à la suite de l'étape de ladite demande d'authentification.

Ainsi, l'invention repose sur une approche inventive de l'authentification de client au sein d'un système de fourniture d'identités, en procurant à ce système la capacité à intégrer des niveaux d'identités pour un même client. Ces niveaux d'identités correspondent à des résultats d'authentification du client par différentes méthodes, en fonction de requêtes émises par les fournisseurs de services, afin d'authentifier ce client.

Selon un mode de mise en oeuvre avantageux de l'invention, ladite autorisation d'accès audit service délivrée audit client se présente sous la forme d'une assertion d'authentification transmise par ledit fournisseur d'identités audit fournisseur de services, ladite assertion comprenant l'indication dudit dernier niveau d'identité mémorisé par ledit fournisseur d'identités.

Ainsi, la transmission du dernier niveau d'identité mémorisé est réalisée au travers d'une déclaration identifiée au sein d'une structure existante sans qu'il soit nécessaire de faire appel à un nouveau protocole d'échange de données entre le fournisseur d'identités et le fournisseur de services.

Dans un mode de réalisation préférentiel de l'invention, ledit niveau d'identité requis par ledit fournisseur de services pour l'accès à un service prédéfini donné est inséré par ledit fournisseur de services dans sa requête de demande d'authentification d'un client transmise audit fournisseur d'identités.

Cette insertion au sein d'une requête d'authentification permet d'utiliser les modes d'interrogation des fournisseurs de service pour transmettre une information supplémentaire à destination des fournisseurs de services. Ainsi, ces derniers disposent, dans une même requête, de l'ensemble des informations nécessaires à l'authentification du client, comme par exemple : l'adresse du fournisseur de services, l'identifiant du client, le niveau d'identité demandé, etc.

L'invention concerne également une structure arborescente de hiérarchisation d'une pluralité de niveaux d'identités d'au moins une entité *E* parmi une pluralité d'entités composant ladite structure, au moins une desdites identités composant ladite structure comprenant au plus un parent et *n* enfants, *n* étant un entier naturel.

Selon l'invention, dans une telle structure :
- au moins l'une desdites identités composant ladite structure comprend un niveau unique de hiérarchie d'identités dans ladite structure ;
- ledit niveau de hiérarchie d'identités desdits *n* enfants d'une identité *I* de ladite entité *E* est supérieur au niveau de hiérarchie d'identités de ladite identité *I*, de façon que si une demande d'authentification de ladite entité *E* est transmise par un fournisseur de services à un fournisseur d'identités, ce dernier compare le niveau d'identité requis compris dans ladite demande d'authentification reçue dudit fournisseur de services, avec un dernier niveau de hiérarchie d'identités mémorisé suite à une authentification antérieure de ladite entité *E.*

Dans une telle structure, chaque client dispose de plusieurs niveaux d'identités. Ces niveaux d'identités d'une même entité *E* sont disposés dans la structure arborescente de telle sorte que les niveaux d'identités des feuilles de l'arbre de la structure sont ceux qui vont résulter de l'authentification la plus forte qu'il est possible de réaliser par le fournisseur d'identités. Par exemple, l'identité d'une personne physique en tant que membre d'une entité organisationnelle, sera d'un niveau supérieur (sous-entendu nécessitera une plus fine granularité de la gestion des droits ou des données d'accès ou d'authentification) à la seule identité de l'entité organisationnelle. L'identité de cette personne physique pourra donc, par exemple, être une feuille de l'arbre de la structure tandis que l'identité de l'entité organisationnelle pourra être le parent de l'identité de la personne physique dans la structure. Cette structure peut par exemple être décrite par un schéma XML ou être mise en oeuvre au sein d'une base de données.

L'invention concerne encore un dispositif d'authentification d'un client souhaitant accéder à un service d'un fournisseur de services, ledit fournisseur de services interrogeant un fournisseur d'identités pour vérifier le niveau d'identité requis pour autoriser ledit client à accéder audit service,

Selon l'invention, un tel dispositif comprend :
- au moins un moyen de vérification auprès dudit fournisseur d'identités qu'un niveau d'identité correspondant à au moins une authentification antérieure dudit client est mémorisé au sein dudit fournisseur d'identités ;
- des moyens de comparaison dudit niveau d'identité requis pour l'accès audit service par rapport audit niveau d'identité mémorisé ;
- des moyens de délivrance audit client d'une autorisation d'accès audit service, directement à la suite de la vérification, par ledit moyen de vérification, que le niveau d'identité requis pour l'accès audit service est bien inférieur audit niveau d'identité mémorisé ;
- des moyens de demande d'authentification dudit client répondant audit niveau d'identité requis, dans le cas où le niveau d'identité requis pour l'accès audit service est supérieur audit niveau d'identité mémorisé ou bien dans le cas où aucune authentification du client n'est disponible ;
- des moyens de remplacement dudit niveau d'identité mémorisé par ledit niveau d'identité requis, si ledit client est authentifié en réponse à la requête effectuée par lesdits moyens de demande d'authentification.

Avantageusement un tel dispositif peut être mis en oeuvre au sein d'un fournisseur d'identités.

Ainsi, un seul système est responsable de l'authentification des clients souhaitant accéder aux services. Dans un mode de réalisation alternatif de l'invention, un tel fournisseur d'identités peut également être réparti au sein d'un réseau et disposer de moyens permettant aux différents fournisseurs d'identités, mettant en oeuvre ce dispositif, de communiquer entre eux, fournissant de cette manière la capacité implicite au réseau d'authentifier n'importe quel client, quelque soit le service auquel ce client souhaite accéder.

L'invention concerne encore un dispositif de demande d'authentification par un fournisseur de services auprès d'un fournisseur d'identités de l'identité d'un client, sous la forme d'une autorisation d'accès permettant audit client d'accéder à un service dudit fournisseur de services.

Selon l'invention, un tel dispositif comprend des moyens d'obtention, auprès dudit fournisseur d'identités, d'au moins une information représentative d'un niveau d'identité requis pour l'accès audit service.

Avantageusement un tel dispositif peut être mis en oeuvre au sein d'un fournisseur de services.

L'invention concerne également un produit programme d'ordinateur téléchargeable depuis un réseau de communication et/ou stocké sur un support lisible par ordinateur et/ou exécutable par un microprocesseur. Selon l'invention, un tel programme comprend des instructions de code de programme pour la mise en oeuvre des étapes du procédé d'authentification.

L'invention concerne encore un signal d'assertion d'authentification destiné à être échangé entre au moins un fournisseur d'identités et au moins un fournisseur de services, suite à une demande d'accès d'un client à l'un au moins des services dudit fournisseur de services et à une demande d'authentification dudit client transmise par ledit fournisseur de services audit fournisseur d'identités. Selon l'invention un tel signal comprend au moins une information représentative d'un niveau d'identité requis par ledit fournisseur de services.

L'invention concerne enfin un signal de requête d'authentification destiné à être échangé entre au moins un fournisseur d'identités et au moins un fournisseur de services, suite à une demande d'accès d'un client à l'un au moins des services dudit fournisseur de services. Selon l'invention, un tel signal comprend au moins une information représentative d'un niveau d'identité requis par ledit fournisseur de services.

### 5. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 illustre, de façon schématique, la structure matérielle d'un fournisseur d'identités ;
- la figure 2 illustre, de façon schématique, la structure matérielle d'un fournisseur de services ;
- la figure 3 décrit le déroulement d'une interaction entre un SP et un IdP dans le cadre d'un système gérant plusieurs niveaux d'identité ;
- la figure 4 présente un exemple de modélisation de la structure arborescente des identités présente sur l'IdP.

### 6. Description détaillée de l'invention

### 6.1 Rappel du principe de l'invention

Dans le cadre de la présente invention, on s'intéresse donc à la prise en compte d'un niveau d'identité des clients par un fournisseur d'identités dans le contexte d'authentification des clients. On entend par authentification la vérification de l'identité d'un client. On se place ici dans un contexte général où la notion de client n'est pas limitée à celle d'un individu physique acheteur auprès d'un prestataire ou d'un fournisseur de biens, mais où le client est considéré comme toute entité pouvant accéder à des ressources, et faisant partie d'un groupe d'entités, pouvant lui-même faire partie d'un groupe d'entités plus global, et ce sans limitation d'imbrication, tel que :
- un élève dans une classe, une classe dans une école ;
- un employé dans une entreprise ;
- une machine dans un parc informatique ;
- une application informatique distribuée ;
- une entité individuelle dans une entité organisationnelle, une entité organisationnelle dans une autre entité organisationnelle.

Dans le cas, par exemple, d'écoliers, un élève dans une classe possède plusieurs niveaux d'identités qui sont :
- son identité en tant qu'individu ;
- son identité en tant qu'élève appartenant à une classe ;
- son identité en tant qu'élève appartenant à une école.

L'invention propose donc de définir un fournisseur d'identités (IdP) ayant des capacités de gestion de ces types clients et de leurs différents niveaux d'identités et les interactions de cet IdP avec les différents SP avec lequel il est en relation.

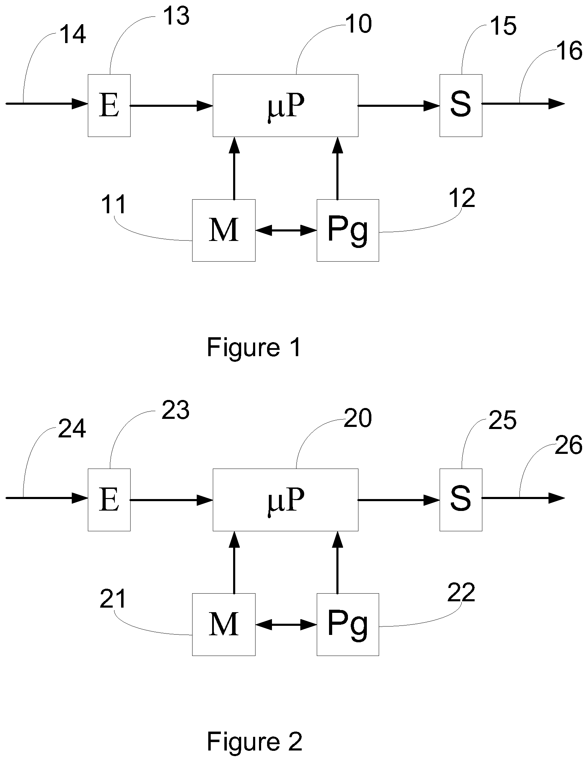

La structure du fournisseur d'identités est illustrée schématiquement par la figure 1. Il comprend une mémoire M 11, et une unité de traitement 10 équipée d'un microprocesseur µP, qui est piloté par un programme d'ordinateur (ou application) Pg 12. L'unité de traitement 10 reçoit en entrée, via un module d'interface d'entrée réseau E 13, des requêtes et/ou des réponses clients 14, que le microprocesseur µP traite, selon les instructions du programme Pg 12, pour générer des commandes et/ou des réponses 11, qui sont transmises via un module d'interface de sortie réseau S 15.

La structure d'un fournisseur de services est illustrée schématiquement par la figure 2. Il comprend une mémoire M 21, et une unité de traitement 20 équipée d'un microprocesseur µP, qui est piloté par un programme d'ordinateur (ou application) Pg 22. L'unité de traitement 20 reçoit en entrée, via un module d'interface d'entrée réseau E 23, des requêtes et/ou des réponses clients 24, que le microprocesseur µP traite, selon les instructions du programme Pg 22, pour générer des commandes et/ou des réponses 22, qui sont transmises via un module d'interface de sortie réseau S 25.

Le principe général de l'invention repose sur :
- La gestion, au sein de IdP, de niveaux d'identités différents, ainsi que des relations d'appartenance entre ces niveaux, composant une structure arborescente.
   - Par exemple, on définit un niveau « identité collective » et un niveau « identité individuelle » et on définit des liens (par le biais de la structure arborescente) qui décrivent le fait qu'une identité individuelle appartient à une identité collective.
   - Chaque client déclaré dans la structure arborescente est associé à un unique niveau.
   - Une identité d'un niveau donné (par exemple, un utilisateur individuel) dispose d'autant d'identités (en plus de la sienne) dans le système de gestion d'identités qu'il existe de niveaux d'identités auxquels son niveau d'identité appartient (par exemple dans notre cas un utilisateur individuel dispose de deux identités, une individuelle et une collective).
- L'ajout d'un nouveau paramètre dans les requêtes et les réponses échangées entre l'IdP et le SP lors de la phase d'authentification, permettant :
   - au SP de préciser le niveau d'identité désiré dans la requête d'authentification,
   - à l'IdP de préciser le niveau d'identité renvoyé dans la réponse d'authentification.
- On définit enfin un processus de traitement permettant à l'IdP de réaliser des manipulations entre les différentes identités d'un utilisateur :
   - Si une identité d'un niveau inférieur (au sens de l'appartenance) au niveau demandé par le SP est déjà authentifiée au niveau de l'IdP, alors l'IdP n'a pas besoin pour générer sa réponse d'authentification de réauthentifier l'utilisateur au niveau demandé par le SP.

Dans un mode de réalisation particulier, la structure arborescente peut être définie comme une base de données des utilisateurs, qui permet de définir les relations entretenues entre les niveaux d'identités de ces derniers. Dans un autre mode de réalisation, la structure arborescente peut être définie comme un simple fichier XML de description des niveaux d'identités et dont les extrémités (les feuilles) représentent des identités individuelles.

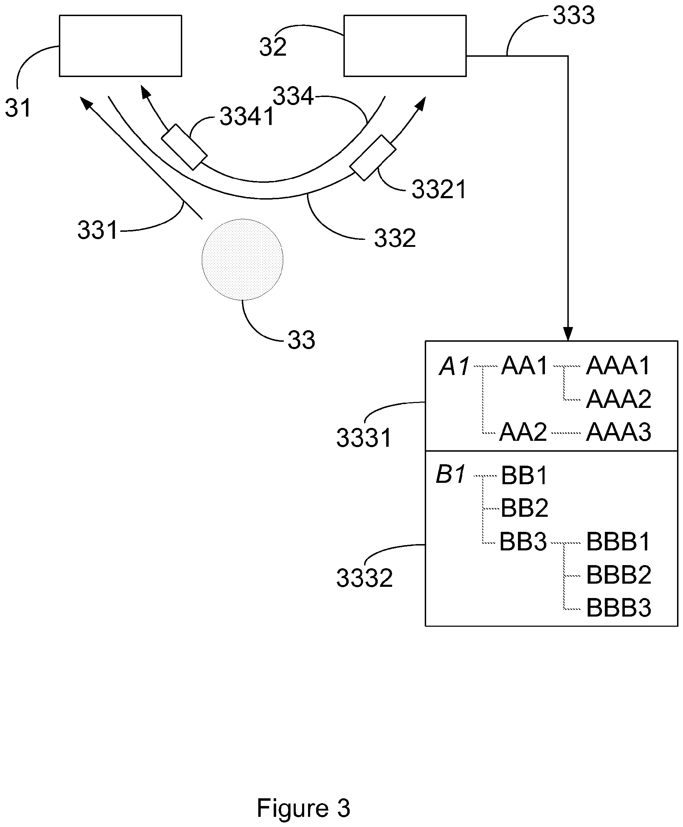

On présente en relation avec la figure 3, le déroulement d'une interaction entre un SP 31 et un IdP 32 dans le cadre d'un système gérant plusieurs niveaux d'identités. Dans cet exemple, la structure arborescente des identités contient deux branches principales (*BR_{A}* 3331 et *BR_{B}* 3332) ayant chacune trois niveaux d'identités (*A, AA, AAA* et *B, BB, BBB*). Chacun de ces trois niveaux d'identité donne accès à des services spécifiques au sein du SP 31. On suppose que l'utilisateur est déjà authentifié au sein de l'IdP 32 à l'aide de son identité individuelle de niveau III (*AAA3*). L'interaction entre le SP 31 et l'IdP 32 se déroule alors de la manière suivante :
1. L'utilisateur 33 demande (331) l'accès à un service au niveau du SP 31.
2. Le SP 31 le redirige (332) vers l'IdP 32 pour qu'il obtienne une assertion d'authentification, en précisant dans sa requête 3321 qu'il désire une identité de niveau "Niveau II".
3. l'IdP 32 vérifie (333) que l'utilisateur 33 est déjà authentifié en son sein sous l'identité de niveau "Niveau III" AAA3. L'IdP 32 déduit donc que l'identité AA2 est aussi authentifiée (d'après la règle de traitement d'inclusion des niveaux d'identités).
4. l'IdP 32 redirige (334) l'utilisateur 33 vers le SP 31 et fournit (334) au SP 31 une assertion d'authentification 3341, indiquant qu'AA2 est authentifié. Cette assertion 3341 contient les informations nécessaires à la création d'une session d'authentification pour l'utilisateur 33 au niveau du SP 31. l'IdP 32 précise en même temps que l'identité renvoyée est bien de niveau "Niveau II". L'utilisateur 33 peut ensuite accéder au service demandé.

Dans un autre mode de réalisation il est possible qu'une identité d'un niveau donné puisse appartenir à plusieurs identités d'un niveau immédiatement supérieur. Dans ce cas de figure, l'IdP effectue une étape complémentaire du choix de l'une ou l'autre des identités immédiatement supérieures en fonctions de règles qui peuvent être prédéfinies ou d'un contexte d'exécution.

Ainsi, dans l'exemple précédent, AA3 pourrait ainsi appartenir à AA2 et à AA1. Ceci équivaudrait dans une situation concrète à une personne ayant une ligne téléphonique dans sa résidence principale et une dans sa résidence secondaire. Cette personne physique est alors modélisée dans le système de gestion d'identités comme une identité individuelle appartenant à deux identités collectives. Suivant le contexte (c'est-à-dire le point d'accès utilisé, principal ou secondaire), le système sait quelle identité collective choisir.

Dans un autre mode d'implémentation, il est aussi possible d'associer un ou plusieurs rôles à une identité d'un niveau donné par rapport à une identité d'un niveau immédiatement supérieur plutôt que de gérer la seule notion d'appartenance. Ceci pourrait équivaloir, dans un contexte réel, à un environnement dans lequel des utilisateurs appartiennent à un groupe et dans ce groupe, un des utilisateurs a le rôle d'administrateur. Par exemple, en ajoutant à la structure arborescente des identités des informations de rôles, l'arbre se lit alors comme suit :
- "AAA1 appartient à AA1"
- "AAA2 appartient à AA1 et de plus, est administrateur de AA1".

Par la suite, on présente notamment le cas d'une implémentation dans la norme « SAML » d'OASIS. Il est clair cependant que l'invention ne se limite pas à cette application particulière, mais peut également être mise en oeuvre dans d'autres systèmes d'authentification, et par exemple dans ceux définis par la norme « WS-trust » et plus généralement dans tous les cas où les objectifs listés par la suite sont intéressants.

### 6.2 Description d'un mode de réalisation

On s'intéresse ici à la description d'un mode de réalisation particulier de l'invention dans le cadre de la norme « SAML » d'OASIS, en lien avec les interactions entre le SP et l'IdP définies dans le paragraphe précédent et présentés en lien avec la figure 3.

### 6.2.1 Structure arborescente des identités

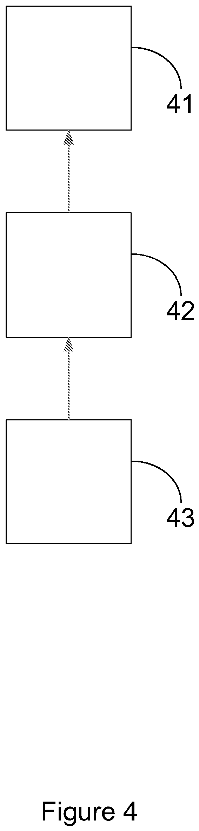

On présente, en relation avec la figure 4, un exemple de modélisation (selon le langage de modélisation unifié « UML ») de la structure arborescente des identités présente sur l'IdP. Dans cette modélisation, l'arborescence d'identité comporte trois niveaux. Chaque niveau est représenté comme un objet (41, 42, 43). Le niveau 41 est le niveau d'identité le plus faible. Le niveau 42 hérite des propriétés du niveau 41 tout en augmentant son niveau d'identité. Le niveau 43 hérite des propriétés du niveau 42 et par voie de conséquence de celles du niveau 41, tout en augmentant son niveau d'identité. L'avantage de ce type de modélisation est la possibilité de définir des propriétés d'accès et/ou des rôles de bas niveau pour les identités s'intégrant dans le niveau 41 et d'attribuer de plus en plus de droits pour les identités des niveaux inférieurs.

L'implémentation de cette structure peut, par exemple, être réalisée sous la forme d'une base de données relationnelle définissant les identités et les relations entretenues entre elles.

Dans un autre mode de réalisation, la structure arborescente peut être définie comme un document XML, permettant de hiérarchiser les identités en fonction d'une identité de base définie comme étant la racine du document XML en question. Ainsi, l'ajout d'un utilisateur dans la structure est facilité, car il peut être réalisé directement dans le fichier.

### 6.2.2 Implémentation « SAML »

Actuellement, les cadres de travail (« framework ») de gestion d'identités comme « SAML » v2 (dont « Liberty ID-FF » 1.2 est un sous-ensemble) ne prennent pas en compte le fait qu'un système puisse gérer différents niveaux d'identités. Ainsi, dans les requêtes/réponses d'authentification lors des échanges entre l'IdP et le SP, il n'existe pas d'élément XML dont la fonction corresponde à la gestion de ces niveaux. Une implémentation de l'invention au sein de « SAML » consiste donc à créer un nouvel élément XML pour les requêtes et les réponses d'authentification. Ce nouvel élément a la définition suivante :

| |
|---|
| <SubjectType> [optional] |
| Spécifie le niveau d'identité pour le client indiqué. Si ce paramètre optionnel est omis, le fournisseur d'identités doit utiliser lors de sa réponse, la valeur par défaut associée à l'émetteur (SP). L'émetteur de la requête peut utiliser la valeur *"urn:oasis:names:tc:SAML:2.0:subjecttype:any"* pour spécifier que le niveau d'identité pour le client indiqué est indifférent. Les autres valeurs spécifiques requises sont dépendantes de la structure arborescente définissant le modèle d'identité implémenté par de fournisseur d'identité (IdP). |
| <xs:element name=SubjectType" type="xs:anyURI"/> |

On trouve ci-dessous l'exemple d'une requête d'authentification, respectant la norme « SAML », envoyée par le SP à destination de son IdP avec ce paramètre : le SP précise qu'il désire une identité de niveau collectif (identifié par les balises <saml:SubjectType> et </saml:SubjectType>) :

| |
|---|
| <AuthnRequest |
| ProviderName="http://www.provider.com" |
| IsPassive="false" |
| AssertionConsumerServiceIndex="1 " |
| IssueInstant="2005-07-02T16:58:03.343Z" |
| Destination="http://identityprovideruri.com/idp?Module=Authn" |
| Version="2.0" |
| ID="dc7de3de-396f-42a5-965e-58b8b4e15363" |
| xmlns="urn:oasis:names:tc:SAML:2.0:protocol" |
| xmlns:saml="urn:oasis:names:tc:SAML:2.0:assertion"> |
| <saml:Issuer>http://serviceprovider.com</saml:Issuer> |
| <saml:Subject> |
| ***<saml:SubjectType>*** |
| ***urn:oasis:names:tc:SAML:2.0:subjecttype:collective<*/*saml:SubjectType>*** |
| </saml:Subject> |
| </AuthnRequest> |

En réponse à la requête précédente, l'IdP renvoie une réponse d'authentification (assertion) dans laquelle il précise qu'il renvoie une identité de niveau collectif (identifié par les balises <saml:SubjectType> et </saml:SubjectType>) :

| |
|---|
| <Response |
| Destination="http://serviceprovider.com/SAML/Authentication" |
| IssueInstant="2005-07-02T16:58:03.531Z" |
| InResponseTo="dc7de3de-396f-42a5-965e-58b8b4e15363" |
| ID="6a1c8111-9532-446e-9850-2ca9ff58e98d" |
| xmlns="urn:oasis:names:tc:SAML:2.0:protocol" |
| xmlns:saml="urn:oasis:namesac:SAML:2.0:assertion"> |
| <Status> |
| <StatusCode Value="urn:oasis:namesac:SAML:2.0atatus:Success"/> |
| </Status> |
| <saml:Issuer>http://identityprovideruri.com/</saml:Issuer> |
| <saml:Assertion IssueInstant="2005-07-02TI6:58:03.546Z" Version="2.0" ID="b2947acb-abf7-483a-b34a-33aa9ff8356f"> |
| <saml:Issuer>http://identityprovideruri.com/</saml:Issuer> |
| <saml:Subject> |
| <saml:NameID>DSODSOKDSO</saml:NameID> |
| <saml:SubjectConfirmation Method="urn:oasis:namesac:SAML:2.0:cm:bearer"> |
| <saml:SubjectConfirmationData Recipient="http://serviceprovider.com/" NotOnOrAfter="2005-07-02T17:02:56.593Z" NotBefore="2005-07-02T16:57:56.593Z" InResponseTo="dc7de3de-396f-42a5-965e-58b8b4e15363"/> |
| </saml:SubjectConfirmation> |
| ***<saml:SubjectType>*** |
| ***urn:oasis:names:tc:SAML:2.0:subjecttype:collective<*/*saml:SubjectType>*** |
| </saml:Subject> |
| <saml:Conditions NotOnOrAfter="2005-07-02T17:02:56.593Z" NotBefore="2005-07-02T16:57:56.593Z"/> |
| <saml:AuthnStatement SessionIndex="e0474917-8b2a-4fa5-bd7c-c9e4163ff5c8" AuthnInstant="2005-07-02T16:57:56.593Z"> |
| <saml:AuthnContext> |
| <saml:AuthnContextClassRef> |
| urn:oasis:names:tc:SAML:2.0:ac:classes:InternetProtocolPassword</saml:AuthnC ontextClassRef> |
| </saml:AuthnContext> |
| </saml:AuthnStatement> |
| </saml:Assertion> |
| </Response> |

### 6.3 Scénario d'usage

On examine dans ce scénario le cas d'un opérateur téléphonique gérant deux types d'identité :
- des utilisateurs, qui sont des identités individuelles,
- des foyers, qui sont des identités collectives.

Au sein de la famille Martin qui compte trois personnes, Robert, Julie et Alice, cette dernière veut accéder à des services via sa connexion Internet. Elle dispose notamment des services suivants (fournis par son fournisseur de services) :
- une messagerie vocale collective pour son téléphone utilisant la connexion Internet (téléphone sous IP),
- un album photo collectif,
- une messagerie électronique individuelle.
   1. Elle accède au SP collectif "messagerie vocale du téléphone IP".
   2. Le SP génère une requête d'authentification à destination de l'IdP du fournisseur d'accès à Internet de la famille Martin. Il précise dans la requête qu'il désire une identité de niveau "collectif".
   3. L'IdP identifie la famille Martin de manière implicite grâce à l'adresse réseau de leur connexion Internet et renvoie au SP une assertion d'authentification contenant l'identité collective "famille Martin" et précise que l'identité renvoyée est de niveau "collectif".
   4. Alice peut alors consulter les messages vocaux (sur le répondeur téléphonique) de la famille Martin.
   5. Elle désire ensuite consulter ses e-mails. Elle accède au SP de messagerie électronique, qui génère une requête d'authentification à destination de l'IdP en précisant qu'il désire une identité de niveau "individuel".
   6. L'IdP, qui ne dispose pas de session d'authentification de niveau individuel pour Alice, lui demande de s'authentifier en renseignant son nom d'utilisateur et son mot de passe. Cela crée une session de niveau individuel pour Alice au niveau de l'IdP qui remplace la session collective précédente. L'IdP renvoie ensuite au SP une assertion d'authentification contenant l'identité individuelle "Alice Martin" et précise que l'identité renvoyée est de niveau "individuel".
   7. Alice peut alors consulter ses messages électroniques personnels.
   8. Alice désire accéder au SP collectif d'album photo. Celui-ci génère une requête d'authentification à destination de l'IdP en précisant qu'il désire une identité de niveau "collectif".
   9. L'IdP dispose d'une session d'authentification individuelle pour Alice. Il sait qu'Alice appartient à l'identité collective "Famille Martin", par le biais de la structure arborescente, donc que c'est la famille Martin qui est authentifiée par le biais d'Alice. Il génère donc une assertion d'authentification pour le SP contenant l'identité collective "famille Martin" et précise que l'identité renvoyée est de niveau "collectif".
   10. Alice peut alors consulter l'album photo familial.
   11. Si Alice veut accéder plus tard à un service individuel, dans la mesure où sa session individuelle est toujours présente au niveau de l'IdP, elle n'aura pas à se réauthentifier.

## Revendications

1. Procédé d'authentification d'un client souhaitant accéder à un service d'un fournisseur de services, ledit fournisseur de services interrogeant un fournisseur d'identités pour vérifier l'identité dudit client et autoriser ce dernier à accéder audit service,
**caractérisé en ce qu'**il comprend :
- au moins une étape de vérification, par ledit fournisseur d'identités, qu'un niveau d'identité correspondant à au moins une authentification antérieure dudit client est mémorisé au sein dudit fournisseur d'identités,
- une étape de délivrance, audit client, d'une autorisation d'accès audit service, ladite étape étant effectuée :
- soit directement à la suite de ladite étape de vérification, dans le cas où le niveau d'identité requis pour l'accès audit service est inférieur audit niveau d'identité mémorisé,
- soit à la suite des étapes suivantes, dans le cas où le niveau d'identité requis pour l'accès audit service est supérieur audit niveau d'identité mémorisé ou bien dans le cas où aucune authentification du client n'est disponible :
- demande d'authentification dudit client répondant audit niveau d'identité requis,
- remplacement dudit niveau d'identité mémorisé par ledit niveau d'identité requis si ledit client est authentifié par ledit fournisseur d'identités à la suite de l'étape de ladite demande d'authentification.

2. Procédé d'authentification d'un client souhaitant accéder à un service d'un fournisseur de services selon la revendication 1, **caractérisé en ce que** ladite autorisation d'accès audit service délivrée audit client se présente sous la forme d'une assertion d'authentification transmise par ledit fournisseur d'identités audit fournisseur de services, ladite assertion comprenant l'indication dudit dernier niveau d'identité mémorisé par ledit fournisseur d'identités.

3. Procédé d'authentification d'un client souhaitant accéder à un service d'un fournisseur de services selon l'une quelconque des revendications 1 et 2, **caractérisé en ce que** ledit niveau d'identité requis par ledit fournisseur de services pour l'accès à un service prédéfini donné est inséré par ledit fournisseur de services dans sa requête de demande d'authentification d'un client transmise audit fournisseur d'identités.

4. Structure arborescente de hiérarchisation d'une pluralité de niveaux d'identités d'au moins une entité *E* parmi une pluralité d'entités composant ladite structure, au moins une desdites identités composant ladite structure comprenant au plus un parent et *n* enfants, *n* étant un entier naturel, **caractérisée en ce que** :
- au moins l'une desdites identités composant ladite structure comprend un niveau unique de hiérarchie d'identités dans ladite structure ;
- le niveau de hiérarchie d'identités desdits *n* enfants d'une identité *I* de ladite entité *E* est supérieur au niveau de hiérarchie d'identités de ladite identité *I*, de façon que si une demande d'authentification de ladite entité *E* est transmise par un fournisseur de services à un fournisseur d'identités, ce dernier compare le niveau d'identité requis compris dans ladite demande d'authentification reçue dudit fournisseur de services, avec un dernier niveau de hiérarchie d'identités mémorisé suite à une authentification antérieure de ladite entité *E.*

5. Fournisseur d'identité comprenant des moyens d'authentification d'un client souhaitant accéder à un service d'un fournisseur de services, ledit fournisseur de services interrogeant ledit fournisseur d'identités pour vérifier le niveau d'identité requis pour autoriser ledit client à accéder audit service,
**caractérisé en ce qu'**il comprend :
- au moins un moyen de vérification qu'un niveau d'identité correspondant à au moins une authentification antérieure dudit client est mémorisé au sein dudit fournisseur d'identités ;
- des moyens de comparaison dudit niveau d'identité requis pour l'accès audit service par rapport audit niveau d'identité mémorisé ;
- des moyens de délivrance audit client d'une autorisation d'accès audit service, directement à la suite de la vérification, par ledit moyen de vérification, que le niveau d'identité requis pour l'accès audit service est bien inférieur audit niveau d'identité mémorisé ;
- des moyens de demande d'authentification dudit client répondant audit niveau d'identité requis, dans le cas où le niveau d'identité requis pour l'accès audit service est supérieur audit niveau d'identité mémorisé ou bien dans le cas où aucune authentification du client n'est disponible ;
- des moyens de remplacement dudit niveau d'identité mémorisé par ledit niveau d'identité requis, si ledit client est authentifié en réponse à la requête effectuée par lesdits moyens de demande d'authentification.

6. Dispositif de demande d'authentification par un fournisseur de services auprès d'un fournisseur d'identités de l'identité d'un client, sous la forme d'une autorisation d'accès permettant audit client d'accéder à un service dudit fournisseur de services,
**caractérisé en ce qu'**il comprend des moyens d'obtention, auprès dudit fournisseur d'identités, d'au moins une information représentative d'un niveau d'identité requis pour l'accès audit service.

7. Fournisseur de services **caractérisé en ce qu'**il met en oeuvre un dispositif de demande d'authentification selon la revendication 6.

8. Produit programme d'ordinateur téléchargeable depuis un réseau de communication et/ou stocké sur un support lisible par ordinateur et/ou exécutable par un microprocesseur,
**caractérisé en ce qu'**il comprend des instructions de code de programme pour la mise en oeuvre des étapes du procédé d'authentification selon l'une quelconque des revendications 1 à 3.

9. Signal d'assertion d'authentification destiné à être échangé entre au moins un fournisseur d'identités et au moins un fournisseur de services, suite à une demande d'accès d'un client à l'un au moins des services dudit fournisseur de services et à une demande d'authentification dudit client transmise par ledit fournisseur de services audit fournisseur d'identités, **caractérisé en ce qu'**il comprend au moins une information représentative d'un niveau d'identité requis par ledit fournisseur de services.

10. Signal de requête d'authentification destiné à être échangé entre au moins un fournisseur d'identités et au moins un fournisseur de services, suite à une demande d'accès d'un client à l'un au moins des services dudit fournisseur de services, **caractérisé en ce qu'**il comprend au moins une information représentative d'un niveau d'identité requis par ledit fournisseur de services.

## Patentansprüche

1. Verfahren zur Authentifizierung eines Kunden, der Zugriff auf einen Dienst eines Dienstanbieters wünscht, wobei der Dienstanbieter einen Identitätsprovider abfragt, um die Identität des Kunden zu überprüfen und letzteren zum Zugriff auf den Dienst zu berechtigen,
**dadurch gekennzeichnet, dass** es enthält:
- mindestens einen Schritt der Überprüfung durch den Identitätsprovider, dass ein Identitätsgrad entsprechend mindestens einer vorherigen Authentifizierung des Kunden im Identitätsprovider gespeichert ist,
- einen Schritt des Lieferns einer Zugriffsberechtigung auf den Dienst an den Kunden, wobei der Schritt ausgeführt wird:
- entweder direkt nach dem Überprüfungsschritt, falls der für den Zugriff auf den Dienst erforderliche Identitätsgrad niedriger als der gespeicherte Identitätsgrad ist,
- oder nach den folgenden Schritten, falls der für den Zugriff auf den Dienst erforderliche Identitätsgrad höher als der gespeicherte Identitätsgrad ist oder falls keine Authentifizierung des Kunden zur Verfügung steht:
- Anfrage einer Authentifizierung des Kunden, die dem erforderlichen Identitätsgrad entspricht,
- Ersatz des gespeicherten Identitätsgrads durch den erforderlichen Identitätsgrad, wenn der Kunde nach dem Schritt der Authentifizierungsanfrage durch den Identitätsprovider authentifiziert wird.

2. Verfahren zur Authentifizierung eines Kunden, der Zugriff auf einen Dienst eines Dienstanbieters wünscht, nach Anspruch 1, **dadurch gekennzeichnet, dass** die an den Kunden gelieferte Zugriffsberechtigung auf den Dienst in Form einer Authentifizierungs-Assertion vorliegt, die vom Identitätsprovider an den Dienstanbieter übertragen wird, wobei die Assertion die Anzeige des letzten vom Identitätsprovider gespeicherten Identitätsgrads enthält.

3. Verfahren zur Authentifizierung eines Kunden, der Zugriff auf einen Dienst eines Dienstanbieters wünscht, nach einem der Ansprüche 1 und 2, **dadurch gekennzeichnet, dass** der vom Dienstanbieter für den Zugriff auf einen gegebenen vordefinierten Dienst geforderte Identitätsgrad vom Dienstanbieter in seine Anforderung einer Authentifizierungsanfrage eines Kunden eingefügt wird, die an den Identitätsprovider übertragen wird.

4. Baumförmige Hierarchisierungsstruktur einer Vielzahl von Identitätsgraden mindestens einer Entität E unter einer Vielzahl von Entitäten, die die Struktur bilden, wobei mindestens eine der die Struktur bildenden Identitäten höchstens einen Elternteil und n Kindteile enthält, wobei n eine natürliche ganze Zahl ist, **dadurch gekennzeichnet, dass**:
- mindestens eine der die Struktur bildenden Identitäten einen einzigen Hierarchiegrad von Identitäten in der Struktur enthält;
- der Hierarchiegrad von Identitäten der n Kindteile einer Identität I der Entität E höher als der Hierarchiegrad von Identitäten der Identität I ist, damit, wenn eine Authentifizierungsanfrage der Entität E von einem Dienstanbieter an einen Identitätsprovider übertragen wird, letzterer den in der vom Dienstanbieter empfangenen Authentifizierungsanfrage enthaltenen Identitätsgrad mit einem letzten Hierarchiegrad von Identitäten vergleicht, der nach einer vorherigen Authentifizierung der Entität E gespeichert wurde.

5. Identitätsprovider, der Einrichtungen zur Authentifizierung eines Kunden enthält, der Zugriff auf einen Dienst eines Dienstanbieters wünscht, wobei der Dienstanbieter den Identitätsprovider abfragt, um den Identitätsgrad zu überprüfen, der erforderlich ist, um den Kunden zum Zugriff auf den Dienst zu berechtigen,
**dadurch gekennzeichnet, dass** er enthält:
- mindestens eine Einrichtung zur Überprüfung, dass ein mindestens einer vorherigen Authentifizierung des Kunden entsprechender Identitätsgrad innerhalb des Identitätsproviders gespeichert ist;
- Einrichtungen zum Vergleich des für den Zugriff auf den Dienst erforderlichen Identitätsgrads mit dem gespeicherten Identitätsgrad;
- Einrichtungen zum Liefern einer Zugriffsberechtigung auf den Dienst an den Kunden, direkt nach der Überprüfung durch die Überprüfungseinrichtung, ob der für den Zugriff auf den Dienst erforderliche Identitätsgrad tatsächlich niedriger ist als der gespeicherte Identitätsgrad;
- Einrichtungen zur Anfrage der Authentifizierung des Kunden, die dem erforderlichen Identitätsgrad entspricht, falls der für den Zugriff auf den Dienst erforderliche Identitätsgrad höher ist als der gespeicherte Identitätsgrad, oder auch falls keine Authentifizierung des Kunden zur Verfügung steht;
- Einrichtungen zum Ersatz des gespeicherten Identitätsgrads durch den erforderlichen Identitätsgrad, wenn der Kunde als Reaktion auf die von den Einrichtungen zur Authentifizierungsanfrage ausgeführte Anforderung authentifiziert wird.

6. Vorrichtung zur Authentifizierungsanfrage der Identität eines Kunden in Form einer Zugriffsberechtigung, die den Kunden zum Zugriff auf einen Dienst des Dienstanbieters berechtigt, durch einen Dienstanbieter bei einem Identitätsprovider,
**dadurch gekennzeichnet, dass** sie Einrichtungen zum Erhalt, bei dem Identitätsprovider, mindestens einer Information enthält, die für einen erforderlichen Identitätsgrad für den Zugriff auf den Dienst repräsentativ ist.

7. Dienstanbieter, **dadurch gekennzeichnet, dass** er eine Vorrichtung zur Authentifizierungsanfrage nach Anspruch 6 verwendet.

8. Computerprogrammprodukt, das von einem Kommunikationsnetzwerk heruntergeladen und/oder auf einem computerlesbaren Träger gespeichert und/oder von einem Mikroprozessor ausgeführt werden kann,
**dadurch gekennzeichnet, dass** es Programmcodeanweisungen zur Durchführung der Schritte des Authentifizierungsverfahrens nach einem der Ansprüche 1 bis 3 enthält.

9. Authentifizierungs-Assertionssignal, das dazu bestimmt ist, zwischen mindestens einem Identitätsprovider und mindestens einem Dienstanbieter nach einer Zugriffsanfrage eines Kunden auf mindestens einen der Dienste des Dienstanbieters und nach einer Authentifizierungsanfrage des Kunden, die vom Dienstanbieter an den Identitätsprovider übertragen wird, ausgetauscht zu werden, **dadurch gekennzeichnet, dass** es mindestens eine Information enthält, die für einen vom Dienstanbieter geforderten Identitätsgrad repräsentativ ist.

10. Authentifizierungs-Anforderungssignal, das dazu bestimmt ist, zwischen mindestens einem Identitätsprovider und mindestens einem Dienstanbieter nach einer Zugriffsanfrage eines Kunden auf mindestens einen der Dienste des Dienstanbieters ausgetauscht zu werden, **dadurch gekennzeichnet, dass** es mindestens eine Information enthält, die für einen vom Dienstanbieter geforderten Identitätsgrad repräsentativ ist.

## Claims

1. Method for authenticating a client wishing to access a service of a service provider, said service provider interrogating an identity provider in order to verify the identity of said client and authorize the latter to access said service,
**characterized in that** it comprises:
- at least one step of verification, by said identity provider, that an identity level corresponding to at least one previous authentication of said client is stored within said identity provider,
- a step of delivering, to said client, an authorization to access said service, said step being performed:
- either directly after said verification step, if the identity level required to access said service is lower than said stored identity level,
- or after the following steps, if the identity level required to access said service is higher than said stored identity level, or else if no client authentication is available:
- requesting authentication of said client in line with said required identity level,
- replacing said stored identity level with said required identity level if said client is authenticated by said identity provider after the step of said authentication request.

2. Method for authenticating a client wishing to access a service of a service provider according to Claim 1, **characterized in that** said authorization to access said service, which authorization is delivered to said client, is in the form of an authentication statement transmitted by said identity provider to said service provider, said statement comprising the indication of said last identity level stored by said identity provider.

3. Method for authenticating a client wishing to access a service of a service provider according to either one of Claims 1 and 2, **characterized in that** said identity level required by said service provider for accessing a given predefined service is inserted by said service provider into its client authentication request enquiry transmitted to said identity provider.

4. Hierarchical tree structure of a plurality of identity levels of at least one entity *E* from among a plurality of entities forming said structure, at least one of said identities forming said structure comprising at most one parent and *n* children, *n* being a natural number, **characterized in that**:
- at least one of said identities forming said structure comprises a single identity hierarchy level in said structure;
- the identity hierarchy level of said *n* children of an identity *I* of said entity *E* is higher than the identity hierarchy level of said identity *I*, such that, if a request to authenticate said entity *E* is transmitted by a service provider to an identity provider, the latter compares the required identity level contained in said authentication request received from said service provider with a last identity hierarchy level stored after a previous authentication of said entity *E*.

5. Identity provider comprising means for authenticating a client wishing to access a service of a service provider, said service provider interrogating said identity provider in order to verify the identity level required to authorize said client to access said service,
**characterized in that** it comprises:
- at least one means for verifying that an identity level corresponding to at least one previous authentication of said client is stored within said identity provider;
- means for comparing said identity level required to access said service with said stored identity level;
- means for delivering, to said client, an authorization to access said service, directly after the verification, by said verification means, that the identity level required to access said service is indeed lower than said stored identity level;
- means for requesting the authentication of said client in line with said required identity level if the identity level required to access said service is higher than said stored identity level, or else if no client authentication is available;
- means for replacing said stored identity level with said required identity level if said client is authenticated in response to the enquiry made by said means for requesting authentication.

6. Device for requesting authentication, by a service provider from an identity provider, of the identity of a client, in the form of an access authorization enabling said client to access a service of said service provider,
**characterized in that** it comprises means for acquiring, from said identity provider, at least one item of information representative of an identity level required to access said service.

7. Service provider, **characterized in that** it implements a device for requesting authentication according to Claim 6.

8. Computer program product downloadable from a communication network and/or stored on a computer-readable medium and/or able to be executed by a microprocessor,
**characterized in that** it comprises program code instructions for implementing the steps of the authentication method according to any one of Claims 1 to 3.

9. Authentication statement signal intended to be exchanged between at least one identity provider and at least one service provider, following a request from a client to access at least one of the services of said service provider and a request to authenticate said client transmitted by said service provider to said identity provider, **characterized in that** it comprises at least one item of information representative of an identity level required by said service provider.

10. Authentication enquiry signal intended to be exchanged between at least one identity provider and at least one service provider, following a request from a client to access at least one of the services of said service provider, **characterized in that** it comprises at least one item of information representative of an identity level required by said service provider.
